# EUROPEAN PATENT APPLICATION

(11) **EP 3 208 430 A1**
(43) Date of publication of application: **23.08.2017**
(21) Application number: 17155652.5
(22) Date of filing: 10.02.2017
(51) Int. Cl.: F01D 25/00, F01D 25/28, F01D 25/34

(54) **AUXILIARY CLEANING SYSTEM FOR GAS TURBINE ENGINES**

(30) Priority: 19.02.2016 US 201615047737
(71) Applicant: General Electric Company, Schenectady, NY 12345 (US)
(72) Inventor: DIWINSKY, David Scott, Cincinnati, OH Ohio 45215 (US)
(74) Representative: Williams, Andrew Richard

(57) **Abstract**

The present disclosure is directed to an auxiliary cleaning system 102 for cleaning a gas turbine engine 10. The auxiliary cleaning system 102 includes an external motoring source 104 mechanically coupled to one or more engine shafts of the gas turbine engine 10. Thus, the external motoring source 104 is configured to turn the one or more shafts 30, 34. The auxiliary cleaning system 102 also includes a cleaning apparatus 105 configured to implement a cleaning procedure on the gas turbine engine 10 while the external motoring source 104 is turning the one or more shafts 30, 34 of the gas turbine engine 10.

## Description

The present invention relates generally to gas turbine engines, and more specifically, to auxiliary cleaning systems for gas turbine engines.

A gas turbine engine generally includes, in serial flow order, a compressor section, a combustion section, a turbine section and an exhaust section. In operation, air enters an inlet of the compressor section where one or more axial or centrifugal compressors progressively compress the air until it reaches the combustion section. Fuel is mixed with the compressed air and burned within the combustion section to provide combustion gases. The combustion gases are routed from the combustion section through a hot gas path defined within the turbine section and then exhausted from the turbine section via the exhaust section.

In particular configurations, the turbine section includes, in serial flow order, a high pressure (HP) turbine and a low pressure (LP) turbine. The HP turbine and the LP turbine each include various rotatable turbine components such as a rotor shaft, rotor disks mounted or otherwise carried by the rotor shaft, turbine blades mounted to and radially extending from the periphery of the disks, and various stationary turbine components such as stator vanes or nozzles, turbine shrouds, and engine frames. The rotatable and stationary turbine components at least partially define the hot gas path through the turbine section. For example, the gas turbine buckets or blades generally have an airfoil shape designed to convert the thermal and kinetic energy of the flow path gases into mechanical rotation of the rotor. As the combustion gases flow through the hot gas path, thermal energy is transferred from the combustion gases to the rotatable and stationary turbine components. Such gas turbine engines are commonly employed on an aircraft.

The efficiency of gas turbine engines is reduced due to environmental contamination buildup in the engine components. For example, compressor blades and vanes can suffer from the accumulation of hydrocarbon deposits, dirt, salt, and corrosion residues, affecting their aerodynamic performance. Such deposits can increase exhaust gas temperature and fuel use and decrease the engine's surge margin.

Thus, it is common to employ water wash procedures in the gas turbine engine on a regular basis. Typical water wash procedures include cyclic washing of the engine with large amounts of water and sometimes, a small amount of detergent. Further, the starter of the gas turbine engine typically motors the engine at approximately 20% rpm during washing.

Starter duty cycles, however, typically require a certain amount of downtime between each start of the engine, e.g. sixty (60) minutes between every three (3) starts. Due to such limitations of the starter duty cycle, the water wash capabilities of the gas turbine engine are also limited.

In view of the aforementioned, an auxiliary cleaning system for gas turbine engines that bypasses the starter duty cycle would be advantageous.

Various aspects and advantages of the invention will be set forth in part in the following description, or may be clear from the description, or may be learned through practice of the invention.

In one aspect, the present disclosure is directed to an auxiliary cleaning system for cleaning a gas turbine engine. The auxiliary cleaning system includes an external motoring source mechanically coupled to one or more engine shafts of the gas turbine engine. Thus, the external motoring source is configured to turn the one or more shafts. The auxiliary cleaning system also includes a cleaning apparatus configured to implement a cleaning procedure on the gas turbine engine while the external motoring source is turning the one or more shafts of the gas turbine engine.

In another aspect, the present disclosure is directed to a method for cleaning a gas turbine engine. The method includes mechanically coupling an external motoring source to one or more engine shafts of the gas turbine engine, with the external motoring source being configured to turn the one or more shafts. Thus, the method includes turning, via the external motoring source, the one or more shafts of the gas turbine engine. The method also includes implementing, via a cleaning apparatus, a cleaning procedure on the gas turbine engine while the shafts are turning.

In yet another aspect, the present disclosure is directed to a gas turbine engine assembly. The gas turbine engine assembly includes a gas turbine engine having one or more engine shafts and an external motoring source mechanically coupled to the one or more engine shafts. Thus, the external motoring source is configured to turn the one or more shafts. The gas turbine engine assembly also includes a cleaning apparatus configured to implement a cleaning procedure on the gas turbine engine while the external motoring source is turning the one or more shafts of the gas turbine engine.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

The subject matter which is regarded as the invention is particularly pointed out and distinctly claimed in the concluding part of the specification. The invention, however, may be best understood by reference to the following description taken in conjunction with the accompanying drawing figures in which:
FIG. 1 illustrates a cross-sectional view of one embodiment of a gas turbine engine that may be utilized within an aircraft according to the present disclosure;
FIG. 2 illustrates a schematic view of one embodiment of a gas turbine engine assembly that may be utilized within an aircraft according to the present disclosure;
FIG. 3 illustrates a block diagram of one embodiment of a cleaning apparatus of an auxiliary cleaning system for a gas turbine engine according to the present disclosure; and
FIG. 4 illustrates a flow diagram of one embodiment of a method for cleaning a gas turbine engine according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

Generally, the present disclosure is directed to an auxiliary cleaning system for cleaning a gas turbine engine. The auxiliary cleaning system includes an external motoring source mechanically coupled to one or more engine shafts of the gas turbine engine. Thus, the external motoring source is configured to turn the one or more shafts as a cleaning apparatus implements a cleaning procedure on the gas turbine engine.

Thus, the present disclosure provides many advantages not present in the prior art. More specifically, conventional on-wing cleaning and/or water wash capabilities are limited by the starter and/or APU operating requirements. Thus, the external motoring source of the present disclosure greatly enhances the cleaning and/or water wash capabilities of the gas turbine engine as there are unlimited cycle durations and no wait periods between cycles. Further, by using an external motoring source, the speed and duration of the turning engine shaft(s) can be extended to allow for longer water wash operation under an increased range of conditions. Thus, the present disclosure is capable of extending the time on-wing for engines and will ultimately lead to less performance related engine removals.

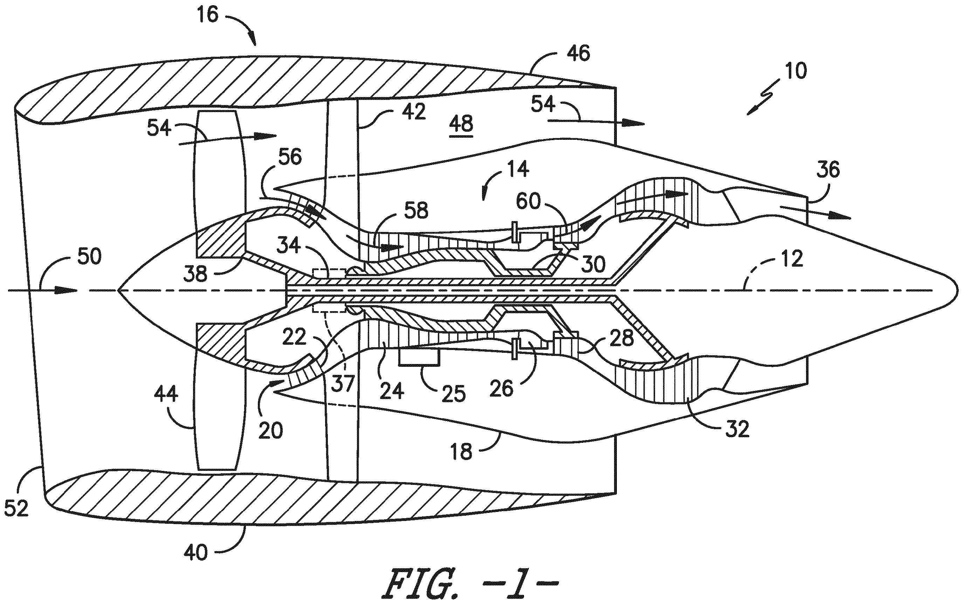

Referring now to the drawings, FIG. 1 illustrates a cross-sectional view of one embodiment of a gas turbine engine 10 that may be utilized within an aircraft in accordance with aspects of the present subject matter, with the engine 10 being shown having a longitudinal or axial centerline axis 12 extending therethrough for reference purposes. In general, the engine 10 may include a core gas turbine engine (indicated generally by reference character 14) and a fan section 16 positioned upstream thereof. The core engine 14 may generally include a substantially tubular outer casing 18 that defines an annular inlet 20. In addition, the outer casing 18 may further enclose and support a booster compressor 22 for increasing the pressure of the air that enters the core engine 14 to a first pressure level. A high pressure, multi-stage, axial-flow compressor 24 may then receive the pressurized air from the booster compressor 22 and further increase the pressure of such air. The pressurized air exiting the high-pressure compressor 24 may then flow to a combustor 26 within which fuel is injected into the flow of pressurized air, with the resulting mixture being combusted within the combustor 26. The high energy combustion products are directed from the combustor 26 along the hot gas path of the engine 10 to a first (high pressure) turbine 28 for driving the high pressure compressor 24 via a first (high pressure) drive shaft 30, and then to a second (low pressure) turbine 32 for driving the booster compressor 22 and fan section 16 via a second (low pressure) drive shaft 34 that is generally coaxial with first drive shaft 30. After driving each of turbines 28 and 32, the combustion products may be expelled from the core engine 14 via an exhaust nozzle 36 to provide propulsive jet thrust.

Additionally, as shown in FIG. 1, the fan section 16 of the engine 10 may generally include a rotatable, axial-flow fan rotor assembly 38 that is configured to be surrounded by an annular fan casing 40. It should be appreciated by those of ordinary skill in the art that the fan casing 40 may be configured to be supported relative to the core engine 14 by a plurality of substantially radially-extending, circumferentially-spaced outlet guide vanes 42. As such, the fan casing 40 may enclose the fan rotor assembly 38 and its corresponding fan rotor blades 44. Moreover, a downstream section 46 of the fan casing 40 may extend over an outer portion of the core engine 14 so as to define a secondary, or by-pass, airflow conduit 48 that provides additional propulsive jet thrust. In addition, the gas turbine engine 10 may include a gearbox 25. Further, the gearbox 25 may be configured at any suitable location in the gas turbine engine 10, but is typically mounted on the fan casing 40 or under the high-pressure compressor 24.

It should be appreciated that, in several embodiments, the second (low pressure) drive shaft 34 may be directly coupled to the fan rotor assembly 38 to provide a direct-drive configuration. Alternatively, the second drive shaft 34 may be coupled to the fan rotor assembly 38 via a speed reduction device 37 (e.g., a reduction gear or gearbox) to provide an indirect-drive or geared drive configuration. Such a speed reduction device(s) may also be provided between any other suitable shafts and/or spools within the engine 10 as desired or required.

During operation of the engine 10, it should be appreciated that an initial air flow (indicated by arrow 50) may enter the engine 10 through an associated inlet 52 of the fan casing 40. The air flow 50 then passes through the fan blades 44 and splits into a first compressed air flow (indicated by arrow 54) that moves through conduit 48 and a second compressed air flow (indicated by arrow 56) which enters the booster compressor 22. The pressure of the second compressed air flow 56 is then increased and enters the high pressure compressor 24 (as indicated by arrow 58). After mixing with fuel and being combusted within the combustor 26, the combustion products 60 exit the combustor 26 and flow through the first turbine 28. Thereafter, the combustion products 60 flow through the second turbine 32 and exit the exhaust nozzle 36 to provide thrust for the engine 10.

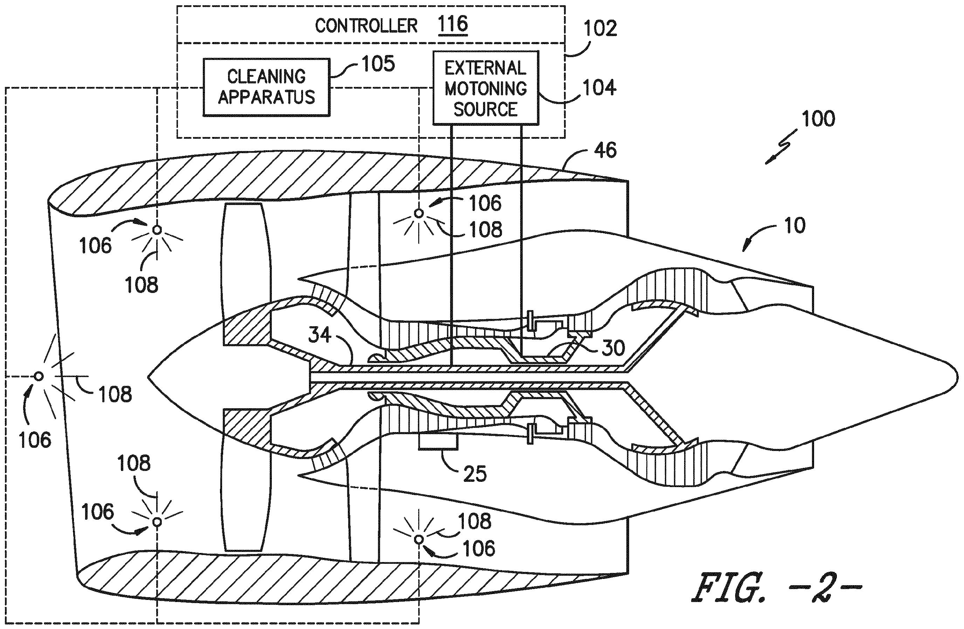

Referring now to FIG. 2, a schematic diagram of one embodiment of a gas turbine engine assembly 100 is illustrated. More specifically, as shown, the gas turbine engine assembly 100 includes a gas turbine engine 10 and an auxiliary cleaning system 102 configured to clean the engine 10 when the engine is not operating. In certain embodiments, as mentioned, the gas turbine engine 10 may include an aircraft engine. Thus, in such embodiments, the aircraft engine may be installed on an aircraft during the cleaning procedure described herein. Further, as shown, the gas turbine engine 10 has one or more engine shafts 30, 34 and an external motoring source 104 mechanically coupled to the engine shaft(s) 30, 34. More specifically, in certain embodiments, the external motoring source 104 may include a crank (manual or automatic), a hydraulic motor, an air-driven motor, a water-driven motor, a gas-powered motor, or any other suitable motoring device. Further, the external motoring source 104 may be installed at any suitable location within the gas turbine engine 10, including but example, a starter of the gearbox 25 or a hand cranking port of the gas turbine engine 10. Thus, the external motoring source 104 is configured to turn the engine shaft(s) 30, 34 when the engine 10 is not operating in its normal operating mode (i.e. driven by the engine starter). In addition, for certain embodiments, the external motoring source 104 is not connected to the gas turbine engine 10 when the engine 10 is operating in its normal operating mode. Rather, during the normal operating mode, the starter duty cycle is configured to turn the engine shafts 30, 34.

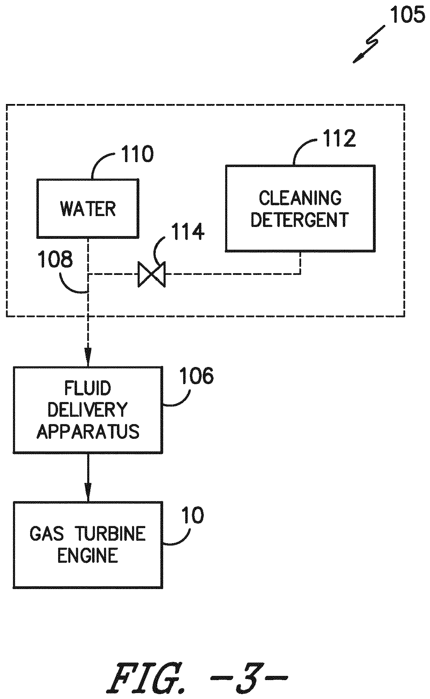

Further, as shown in FIGS. 2 and 3, the auxiliary cleaning system 102 may also include a cleaning apparatus 105 configured to implement a cleaning procedure on the gas turbine engine 10 while the external motoring source 104 is turning the shaft(s) 30, 34 of the gas turbine engine 10. More specifically, as shown in FIG. 3, the cleaning apparatus 105 may include a fluid delivery apparatus 106 configured to introduce a cleaning liquid 108 containing at least water 110 into the gas turbine engine 10. In certain embodiments, as shown in FIG. 3, the cleaning liquid 108 may also include any suitable cleaning detergent in any suitable amount. For example, as shown in FIG. 3, the cleaning detergent 112 may be added to the water 110 via a valve 114 on an as-needed basis. As such, certain wash cycles may include water 110 only, whereas other wash cycles may include water 110 mixed with the cleaning detergent 112.

In addition, as shown in FIG. 2, the fluid delivery apparatus 106 may include a nozzle 108. Or any other suitable fluid delivery device. It should be understood that any number of nozzles 108 may be included in the cleaning apparatus 105. For example, as shown in FIG. 2, a total of five nozzles 108 are included in the cleaning apparatus 105. In further embodiments, more than five nozzles 108 or less than five nozzles 108 may be included in the cleaning apparatus 105.

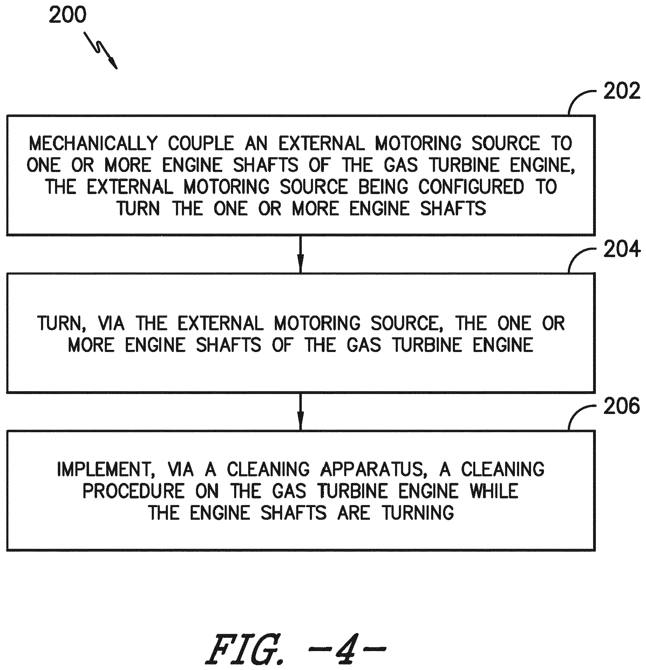

Referring now to FIG. 4, a flow diagram of one embodiment of a method 200 for cleaning a gas turbine engine 10 is illustrated. As shown at 202, the method 200 includes mechanically coupling an external motoring source 104 to one or more engine shafts 30, 34 of the gas turbine engine 10, with the external motoring source 104 being configured to turn the shafts 30, 34. As shown at 204, the method turning, via the external motoring source 104, the shafts 30, 34 of the gas turbine engine 10. As shown at 206, the method 200 includes implementing, via a cleaning apparatus 105, a cleaning procedure on the gas turbine engine 10 while the shafts 30, 34 are turning.

In one embodiment, the method 200 may also include installing the external motoring source 104 into at least a starter of the gearbox 25 or a hand cranking port of the gas turbine engine 10. In further embodiments, the method 200 may further include disconnecting the external motoring source 104 from the gas turbine engine 10 when the gas turbine engine 10 is operating in a normal operating mode. Thus, in certain embodiments, the external motoring source 104 is configured to operate only when the gas turbine engine 10 is off.

In additional embodiments, the method 200 may also include delivering, via a fluid delivery apparatus106 of the cleaning apparatus 105, a cleaning liquid 108 containing at least water 110 into the gas turbine engine 10.

Further, in certain embodiments, the method 200 may include controlling a duration of the cleaning procedure. More specifically, since the external motoring source 104 is external to the gas turbine engine 10 and does not depend on the engine starter, the cleaning procedure can be maximized to any suitable length depending on the condition of the turbine engine 10, rather than being limited by the water wash capabilities of the starter duty cycle. For example, as shown in FIG. 2, the auxiliary cleaning system 102 may include a controller 116 configured to control the external motoring source 104 and/or the cleaning apparatus 105. In additional embodiments, the external motoring source 104, as well as the cleaning apparatus 105 may be controlled manually.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. An auxiliary cleaning system for cleaning a gas turbine engine, the motoring system comprising:
   an external motoring source mechanically coupled to one or more engine shafts of the gas turbine engine, the external motoring source being configured to turn the one or more shafts; and
   a cleaning apparatus configured to implement a cleaning procedure on the gas turbine engine while the external motoring source is turning the one or more shafts of the gas turbine engine.
2. The auxiliary cleaning system of clause 1, wherein the external motoring source is installed into at least one of a starter of a gearbox of the gas turbine engine or a hand cranking port of the gas turbine engine.
3. The auxiliary cleaning system of any preceding clause, wherein the external motoring source comprises at least one of a crank, a hydraulic motor, an air-driven motor, a water-driven motor, or a gas-powered motor.
4. The auxiliary cleaning system of any preceding clause, wherein the external motoring source is not connected to the gas turbine engine when the gas turbine engine is operating in a normal operating mode.
5. The auxiliary cleaning system of any preceding clause, wherein the cleaning apparatus comprises a fluid delivery apparatus configured to introduce a cleaning liquid containing at least water into the gas turbine engine.
6. The auxiliary cleaning system of any preceding clause, wherein the cleaning liquid further comprises a cleaning detergent.
7. The auxiliary cleaning system of any preceding clause, wherein the fluid delivery apparatus comprises at least one nozzle.
8. The auxiliary cleaning system of any preceding clause, wherein the gas turbine engine comprises an aircraft engine.
9. The auxiliary cleaning system of any preceding clause, wherein the aircraft engine is installed on an aircraft during the cleaning procedure.
10. A method for cleaning a gas turbine engine, the method comprising:
   mechanically coupling an external motoring source to one or more engine shafts of the gas turbine engine, the external motoring source being configured to turn the one or more shafts;
   turning, via the external motoring source, the one or more shafts of the gas turbine engine; and
   implementing, via a cleaning apparatus, a cleaning procedure on the gas turbine engine while the shafts are turning.
11. The method of any preceding clause, further comprising installing the external motoring source into at least one of a starter of a gearbox of the gas turbine engine or a hand cranking port of the gas turbine engine.
12. The method of any preceding clause, wherein the external motoring source comprises at least one of a crank, a hydraulic motor, an air-driven motor, a water-driven motor, or a gas-powered motor.
13. The method of any preceding clause, further comprising disconnecting the external motoring source from the gas turbine engine when the gas turbine engine is operating in a normal operating mode.
14. The method of any preceding clause, further comprising delivering, via a fluid delivery apparatus of the cleaning apparatus, a cleaning liquid containing at least water into the gas turbine engine.
15. The method of any preceding clause, further comprising controlling a duration of the cleaning procedure.
16. The method of any preceding clause, wherein the gas turbine engine comprises an aircraft engine, wherein the aircraft engine is installed on an aircraft during the cleaning procedure.
17. A gas turbine engine assembly, the gas turbine engine assembly comprising:
   a gas turbine engine having one or more engine shafts;
   an external motoring source mechanically coupled to the one or more engine shafts, the external motoring source being configured to turn the one or more shafts; and
   a cleaning apparatus configured to implement a cleaning procedure on the gas turbine engine while the external motoring source is turning the one or more shafts of the gas turbine engine.
18. The gas turbine engine assembly of any preceding clause, wherein the external motoring source is installed into at least one of a starter of a gearbox of the gas turbine engine or a hand cranking port of the gas turbine engine.
19. The gas turbine engine assembly of any preceding clause, wherein the external motoring source comprises at least one of a crank, a hydraulic motor, an air-driven motor, a water-driven motor, or a gas-powered motor.
20. The gas turbine engine assembly of any preceding clause, wherein the external motoring source is not connected to the gas turbine engine when the gas turbine engine is operating in a normal operating mode.

## Claims

1. An auxiliary cleaning system (102) for cleaning a gas turbine engine (10), the cleaning system (102) comprising:
an external motoring source (104) mechanically coupled to one or more engine shafts (30, 34) of the gas turbine engine (10), the external motoring source (104) being configured to turn the one or more shafts (30, 34); and
a cleaning apparatus (105) configured to implement a cleaning procedure on the gas turbine engine (10) while the external motoring source (104) is turning the one or more shafts (30, 34) of the gas turbine engine (10).

2. The auxiliary cleaning system (102) of claim 1, wherein the external motoring source (104) is installed into at least one of a starter of a gearbox of the gas turbine engine (10) or a hand cranking port of the gas turbine engine (10).

3. The auxiliary cleaning system (102) of any preceding claim, wherein the external motoring source (104) comprises at least one of a crank, a hydraulic motor, an air-driven motor, a water-driven motor, or a gas-powered motor.

4. The auxiliary cleaning system (102) of any preceding claim, wherein the external motoring source (104) is not connected to the gas turbine engine (10) when the gas turbine engine (10) is operating in a normal operating mode.

5. The auxiliary cleaning system (102) of any preceding claim, wherein the cleaning apparatus (105) comprises a fluid delivery apparatus (106) configured to introduce a cleaning liquid (108) containing at least water into the gas turbine engine (10).

6. The auxiliary cleaning system (102) of claim 5, wherein the cleaning liquid (108) further comprises a cleaning detergent.

7. The auxiliary cleaning system (102) of claim 5 or claim 6, wherein the fluid delivery apparatus (106) comprises at least one nozzle.

8. The auxiliary cleaning system (102) of any preceding claim, wherein the gas turbine engine (10) comprises an aircraft engine.

9. The auxiliary cleaning system (102) of claim 8, wherein the aircraft engine is installed on an aircraft during the cleaning procedure.

10. A method for cleaning a gas turbine engine (10), the method comprising:
mechanically coupling an external motoring source (104) to one or more engine shafts (30, 34) of the gas turbine engine (10), the external motoring source (104) being configured to turn the one or more shafts (30, 34);
turning, via the external motoring source (104), the one or more shafts (30, 34) of the gas turbine engine (10); and
implementing, via a cleaning apparatus (105), a cleaning procedure on the gas turbine engine (10) while the shafts (30, 34) are turning.

11. The method of claim 10, further comprising installing the external motoring source (104) into at least one of a starter of a gearbox of the gas turbine engine (10) or a hand cranking port of the gas turbine engine (10).

12. The method of claim 10 or claim 11, wherein the external motoring source (104) comprises at least one of a crank, a hydraulic motor, an air-driven motor, a water-driven motor, or a gas-powered motor.

13. The method of any of claims 10 to 12, further comprising disconnecting the external motoring source (104) from the gas turbine engine (10) when the gas turbine engine (10) is operating in a normal operating mode.

14. The method of any of claims 10 to 13, further comprising delivering, via a fluid delivery apparatus (106) of the cleaning apparatus (105), a cleaning liquid (108) containing at least water into the gas turbine engine (10).

15. The method of any of claims 10 to 14, further comprising controlling a duration of the cleaning procedure.
